# EUROPÄISCHE PATENTSCHRIFT

(11) **EP 4 449 928 B1**
(45) Veröffentlichungstag und Bekanntmachung des Hinweises auf die Patenterteilung: **14.05.2025**
(21) Anmeldenummer: 23202216.0
(22) Anmeldetag: 06.10.2023
(51) Int. Cl.: A43B 3/24, A43D 3/02, B29D 35/00, B29D 35/06, B29D 35/12

(54) **VARIABLER SCHUH UND VERFAHREN ZUR HERSTELLUNG EINES VARIABLEN SCHUHS**
CONVERTIBLE SHOE AND METHOD FOR MANUFACTURING A CONVERTIBLE SHOE
CHAUSSURE CONVERTIBLE ET PROCÉDÉ DE FABRICATION D'UNE CHAUSSURE CONVERTIBLE

(30) Priorität: 21.04.2023 DE 102023110262
(43) Veröffentlichungstag der Anmeldung: 23.10.2024
(73) Patentinhaber: Joist, Alexander, 53879 Euskirchen (DE)
(72) Erfinder: Joist, Alexander, 53879 Euskirchen (DE)
(74) Vertreter: Louis Pöhlau Lohrentz

(56) Entgegenhaltungen:
- WO-A1-2022/073573
- DE-U1- 202019 000 298
- US-A- 1 842 719
- US-A1- 2008 201 988
- US-A1- 2012 096 653

## Beschreibung

Die Erfindung betrifft ein Verfahren zur Herstellung eines Schuhs gemäß den Merkmalen des Oberbegriffs des Anspruchs 1.

Aus der Praxis sind zweiteilige Schuhe, die ein von der Sohle abnehmbares Oberteil, auch Topper genannt, aufweisen, bekannt. So zeigt beispielsweise die EP 2 134 204 B1 einen Schuh, der ein abnehmbares Oberteil und eine Sohle aufweist, die durch einen Reißverschluss miteinander verbunden sind. Um den Schuh die notwendige Stabilität zu verleihen, weist die Sohle eine Trägerplatte auf. Eine Herstellung dieses mehrteiligen Schuhs ist entsprechend aufwendig und damit kostenintensiv.

Aus dem Gebrauchsmuster DE 20 2009 010 097 U1 ist ein Schuh bekannt, dessen Oberteil sich abnehmen lässt, um den Schuh von einem Sneaker in einen Ballerina zu wandeln. Auch hier ist das Oberteil mittels Reißverschluss abnehmbar befestigt.

Ferner zeigt das Gebrauchsmuster DE 20 2019 000 298 U1 einen variablen Schuh, bei dem das Oberteil mittels eines Reißverschlusses an der Sohle abnehmbar befestigt ist. Dieses Gebrauchsmuster lehrt, dass der Schuh einen Magneten im Fersenbereich des Toppers und der Sohle aufweist, um den Reißverschluss in der geschlossenen Position zu sichern.

Aus der US 2008/0201988 A1 ist beispielsweise ein zweiteiliger Schuh mit einer Oberseite und einer Unterseite, wobei die Oberseite von der Unterseite mittels eines Reißverschlusses abtrennbar ist, bekannt. Dabei wird zunächst die Sohle bzw. die Unterseite hergestellt und anschließend der Reißverschluss am Umfang der Sohle befestigt.

Aus der US 1 842 719 A ist beispielsweise eine Vorrichtung zur Herstellung von Schuhen mit einer Gummisohle mit ganz oder gummierten Seiten bekannt.

Aus der US 2012/0096653 A1 ist beispielsweise eine Schuhformeinheit mit Schutzteil und Rippen zur Verbesserung der Bildung von überschüssigem Material auf der Außensohle bekannt.

Aus der DE 20 2019 000 298 U1 ist beispielsweise ein Schuh, bei dem der Oberstoff von der Sohle mittels eines Verbindungssystems getrennt werden kann, bekannt.

Bei den bisher bekannten zweiteiligen Schuhen ist es notwendig, den Reißverschluss in einem separaten Fertigungsschritt mit der Sohle zu verkleben. Dadurch ist die Herstellung eines derartigen zweiteiligen Schuhs relativ aufwendig und fehleranfällig.

Es ist die Aufgabe der vorliegenden Erfindung, ein Verfahren zur Herstellung eines Schuhs mit einem von der Sohle mittels eines Reißverschlusses abnehmbaren Oberteils zu schaffen welches einen mechanisch robusten Schuh ermöglicht und dabei eine kostengünstige Herstellung erlaubt.

Diese Aufgabe wird durch ein Verfahren zur Herstellung eines Schuhs mit den Merkmalen des Anspruchs 1 erfindungsgemäß gelöst.

Erfindungsgemäß wird ein Verfahren zur Herstellung eines Schuhs vorgeschlagen, wobei der Schuh ein Oberteil aufweist, welches mittels eines trennbaren Reißverschlusses mit der Sohle verbunden ist und durch Öffnen des Reißverschlusses von der Sohle abnehmbar ist. Wesentlich dabei ist, dass der Reißverschluss mit der Sohle verbunden wird, indem die Sohle an ein Teil des Reißverschlusses angespritzt oder angegossen wird oder indem die Sohle um ein Teil des Reißverschlusses umspritzt wird oder ein Teil des Reißverschlusses von der Sohle umgossen wird.

Durch das Anspritzen der Sohle oder Angießen der Sohle an einen Teil des Reißverschlusses wird der Reißverschluss zusammen mit dem Herstellungsprozess zur Herstellung der Sohle mechanisch fest bereits mit der Sohle verbunden. Ein zusätzlicher Arbeitsschritt, um den Reißverschluss mit der Sohle zu verbinden, ist erfindungsgemäß nicht mehr notwendig. Zudem ist die Verbindung durch Anspritzen der Sohle oder Angießen der Sohle an den Reißverschluss mechanisch sehr widerstandsfähig und robust. D.h. dass der durch dieses Herstellungsverfahren hergestellte Schuh eine hohe mechanische Stabilität sowie eine lange Lebensdauer aufweist. Vorzugsweise wird unter Anspritzen oder Angießen der Sohle verstanden, dass Sohlenmaterial im flüssigen Zustand eingebracht wird, welches dann aushärtet um eine feste Sohle auszubilden.

Ein Vorteil des erfindungsgemäßen Herstellungsverfahrens ist ferner, dass der sichtbare Teil des Reißverschlusses relativ klein ist, da der Großteil des Reißverschlusses von der Sohle umspritzt wird und somit der fertige Schuh ein optisch gefälliges Design aufweist. Zudem kann der Reißverschluss durch einen an der Sohle ausgebildeten Wulst verdeckt werden und/oder durch eine an dem Oberteil ausgebildete Lasche verdeckt werden, sodass das äußere Erscheinungsbild des gemäß dem erfindungsgemäßen Verfahren hergestellten Schuhs sich kaum von einem herkömmlichen Schuh mit fest an dem Oberteil befestigter Sohle unterscheidet.

Als Reißverschluss kann insbesondere ein trennbarer oder teilbarer Reißverschluss verwendet werden, der zwei Hälften aufweist, die jeweils ein Textilband aufweisen, welches eine Zahnleiste oder Krampen trägt bzw. Schließglieder trägt. Über einen verschiebbaren Schlitten werden die Schließglieder oder Krampen verbunden oder getrennt. Durch Aushaken kann der Reißverschluss in die zwei Hälften getrennt werden. Insbesondere wird eine Hälfte des Reißverschlusses an der Sohle und die andere Hälfte des Reißverschlusses an dem Oberteil angeordnet. Zum Verbinden des Oberteils mit der Sohle fädelt man den Reißverschluss ineinander und schließt diesen auf bekannte Art und Weise durch Verschieben des Schlittens. Dadurch wird das Oberteil des Schuhs durch den Reißverschluss mit der Sohle verbunden. Der Reißverschluss kann als Metallreißverschluss oder Kunststoffreißverschluss ausgebildet sein.

Von Vorteil ist, dass das Oberteil des Schuhs, auch Topper oder Schuhoberteil genannt, von der Sohle abgenommen werden kann, beispielsweise um dieses zu reinigen oder um die Sohle separat zu reinigen. Ein weiterer Vorteil ist, dass die Sohle zu Reparaturzwecken auf einfache Art und Weise ausgetauscht werden kann.

In einer vorzugsweisen Ausgestaltung kann vorgesehen sein, dass zur Herstellung des Schuhs eine mehrteilige Form verwendet wird, die einen Leisten, ein Sohlenunterteil, sowie wenigstens ein Seitenteil oder mehrere Seitenteile umfasst, und wobei das Sohlenunterteil, das Seitenteil bzw. die Seitenteile und der Leisten gemeinsam eine Sohlenkammer bilden, und wobei der Leisten und/oder das wenigstens eine Seitenteil bzw. die mehreren Seitenteile eine umlaufende Nut aufweist bzw. aufweisen, und in die umlaufende Nut eine Zahnleiste des Reißverschlusses derart eingelegt wird, dass ein Textilband des Reißverschlusses nach unten in die Sohlenkammer ragt.

Insbesondere kann vorgesehen sein, dass nach dem Einlegen der Zahnleiste des Reißverschlusses in die Nut die Form geschlossen wird und anschließend Sohlenmaterial in die Kammer eingespritzt oder eingegossen und dort ausgehärtet wird, wobei beim Aushärten des Sohlenmaterials das Textilband des Reißverschlusses mit dem Sohlenmaterial verbunden wird. Insbesondere versteht man unter Einspritzen des Sohlenmaterials das Einbringen des Sohlenmaterials in flüssiger Form unter höherem Druck als Normaldruck. Unter Eingießen des Sohlenmaterials versteht man insbesondere das Einbringen des Sohlenmaterials in flüssiger Form unter Normaldruck.

Die Sohle kann unterschiedlich ausgeprägt sein. Insbesondere können unterschiedliche Sohlen vorgesehen sein, die sich in Ihren Eigenschaften hinsichtlich Dämpfung und/oder Sohlenprofil unterscheiden. Vorzugsweise kann das Sohlenprofil des Schuhs durch das Sohlenunterteil ausgeformt werden. Das Sohlenunterteil kann dazu eine Profilierung aufweisen, die als Negativform für das Sohlenprofil dient.

In einer vorteilhaften Ausgestaltung kann vorgesehen sein, dass die Sohle austauschbar ist, insbesondere dass verschiedene Sohlen mit einem unterschiedlichen Sohlenprofil vorgesehen sind, die gegeneinander austauschbar sind. Dadurch kann der Charakter des Schuhs geändert werden, indem beispielsweise eine erste Sohle mit einem groben Sohlenprofil vorgesehen ist und eine zweite Sohle mit einem feinen Profil, beispielsweise ein Messerschnittprofil oder eine Sohle mit einem glatten Profil vorgesehen sein kann.

Vorteilhafterweise kann vorgesehen sein, dass die Sohle aus verschiedenen Materialien aufgebaut ist, wobei ein Material der verschiedenen Materialien oder mehrere der verschiedenen Materialien vor dem Einspritzen oder Eingießen des Sohlenmaterials in die Sohlenkammer eingebracht wird, oder dass mehrere der verschiedenen Materialien in die Sohlenkammer nacheinander eingespritzt oder eingegossen werden und dort aushärten. Beispielsweise können Sohlen mit unterschiedlichen Dämpfungseigenschaften vorgesehen sein, um beispielsweise einen anpassbaren Sportschuh zu schaffen. Entsprechend den verwendeten Materialien kann die Dämpfungseigenschaft der Sohle eingestellt werden, um den durch das erfindungsgemäße Verfahren hergestellten Schuh an verschiedene Anwendungsbereiche oder Sportarten individuell anpassen zu können.

Für das Sohlenmaterial können unterschiedliche Materialien verwendet werden. Die Entscheidung für eine bestimmte Materialart wird vorzugsweise anhand der gewünschten Dämpfungseigenschaften der Sohle getroffen. Zudem können in die Sohle auch verschiedene Dämpfungselemente eingebaut werden, um eine bestimmte Dämpfungseigenschaft auszubilden. Verschiedene Sohlenmaterialien können untereinander kombiniert werden. Ferner sind auch Kombinationen von Sohlenmaterialien mit Lederlaufsohlen oder Gummilaufsohlen vorgesehen.

Beispielsweise können für das Sohlenmaterial folgende Materialien verwendet werden: PU-Mono (Polyurethan), PU-PU, PU-TPU (Thermoplastisches Polyurethan), PU-TPE (thermoplastische Elastomere), PU-Gummi, PU-TR (thermoplastischer Kautschuk), PU-Leder, TPU, TPE-U (thermoplastisches Elastomer auf Urethanbasis), SEBS (Styrol-Ethylen-Butylen-Styrol), EVA (EthylenVinylacetat), EVA-TPU, EVA-Gummi, PVC (Polyvinylchlorid), TPS (Styrol-BlockPolymere). Diese Aufzählung ist beispielhaft zu verstehen und stellt keine abschließende Aufzählung oder Eingrenzung der möglichen Sohlenmaterialien dar.

In einer vorzugsweisen Ausgestaltung kann vorgesehen sein, dass in die Sohlenkammer und/oder dass zwischen Leisten und Form eine Folie eingelegt wird und dass die Folie in der Form durch Vakuum gehalten wird. Die Folie kann vor dem Einbringen des Sohlenmaterials in die Sohlenkammer eingelegt werden.

Die Folie kann die Qualität und/oder die Optik der Sohle verbessern, insbesondere zu einem Finish der Sohle beitragen. Die Folie kann beispielsweise aus PU, TPU, PVC ausgebildet sein.

Von Vorteil ist, dass die Sohlengestaltung, das Sohlendesign und die Sohlenprofile frei gestaltbar sind und sich entsprechend den jeweiligen Materialeigenschaften des Sohlenmaterials und des gewollten Designs im Rahmen des handwerklichen Könnens des Fachmanns variierbar sind.

In einer Ausgestaltung kann vorgesehen sein, dass ein Schuhoberteil bereitgestellt wird, welches an seinem unteren umlaufenden Rand ein Teil des trennbaren Reißverschlusses aufweist und wobei der Schuh durch Verbinden des Schuhoberteils mit der Sohle durch Schließen des Reißverschlusses hergestellt wird.

Für das Oberteil des Schuhs, auch Topper oder Schuhoberteil genannt, können verschiedene Schaftmaterialien verwendet werden. Z.B. können gestrickte Materialien verwendet werden oder gewirkte Materialien oder Textil, und/oder Leder, und/oder Synthetics, und/oder Polyurethan und/oder PVC-Folien etc. kann verwendet werden. Auch eine Kombination dieser Materialien untereinander kann verwendet werden, um das Oberteil des Schuhs auszubilden.

Eine Befestigung des Reißverschlussoberteils am Schuhoberteil bzw. Schaft kann durch Nähen oder durch eine Hochfrequenzverschweißung oder durch eine Verklebung erfolgen.

Vorteilhafterweise kann vorgesehen sein, dass das Schuhoberteil an seiner Innenseite eine Lasche aufweist, insbesondere eine umlaufende Lasche aufweist, um die Zahnleiste des Reißverschlusses abzudecken und/oder abzupolstern. Alternativ oder ergänzend kann auch vorgesehen sein, dass der fertige Schuh eine Einlegesohle aufweist, die derart ausgebildet ist, dass der Rand der Einlegesohle die Zahnleiste des Reißverschlusses abdeckt. Vorteilhafterweise kann vorgesehen sein, dass als Reißverschluss ein wasserdichter Reißverschluss verwendet wird. Dadurch ist es auch möglich, wasserbeständige oder wasserdichte Schuhe herzustellen.

Vorteilhafterweise kann vorgesehen sein, dass im Fersenbereich des Schuhs innerhalb des Schafts eine Kappe eingenäht und/oder eingeschweißt und/oder eingeklebt wird, wobei die Kappe zum Verdecken des Reißverschlusses ausgebildet ist. Insbesondere kann auch in der Sohle oder im Bereich der Sohle eine Kappe aus einem Kunststoff oder ähnlichen Materialien mittels Stiften oder einem oder mehreren Magneten vorgesehen sein, um den Reißverschluss zu verdecken.

Die nachfolgenden Aspekte bezüglich des Leistens sind nicht erfindungsgemäß. Bevorzugt kann ein Leisten zur Herstellung eines Schuhs vorgesehen sein, wobei der Schuh ein Oberteil aufweist, welches mittels eines trennbaren Reißverschlusses mit der Sohle verbindbar ist und durch Öffnen des Reißverschlusses von der Sohle abnehmbar ist, zur Herstellung eines Schuhs nach dem Verfahren wie vorangehend beschrieben. Insbesondere ist es möglich, dass der Leisten an seinem unteren Umfang eine umlaufende Nut zum Einlegen einer Zahnleiste des Reißverschlusses aufweist.

Der Leisten kann aus verschiedenen Materialien gefertigt werden. Als Material für den Leisten kann z.B. Holz, und/oder Metall (beispielsweise Aluminium oder Stahl), und/oder Kunststoff (beispielsweise HDPP oder Polyester-Harz oder Epoxid-Harz) oder Kombinationen davon verwendet werden. Der Leisten kann hergestellt werden, indem die Fertigung des Leistens durch einen 3D-Druck oder durch Abdrehen der Form des Leistens, oder Fräsen der Form des Leistens hergestellt wird. Ebenso ist auch eine Herstellung des Leistens in einem Guss-Verfahren denkbar.

Die nachfolgenden Aspekte bezüglich der Form sind nicht erfindungsgemäß. Bevorzugt kann eine Form zur Herstellung eines Schuhs vorgesehen sein, wobei der Schuh ein Oberteil aufweist, welches mittels eines trennbaren Reißverschlusses mit der Sohle verbunden ist und durch Öffnen des Reißverschlusses von der Sohle abnehmbar ist, zur Herstellung eines Schuhs nach dem vorangehend beschriebenen Verfahren. Es ist bevorzugt möglich, dass die Form ein Sohlenunterteil, sowie ein Seitenteil oder mehrere Seitenteile aufweist, wobei das Seitenteil oder die mehreren Seitenteile das Sohlenunterteil seitlich begrenzen, um gemeinsam mit dem erfindungsgemäßen Leisten eine Sohlenkammer zu bilden, und dass entweder das Seitenteil oder die Seitenteile eine umlaufende Nut aufweisen, um eine Zahnleiste eines Reißverschlusses einzulegen, und/oder dass der Leisten wie vorstehend beschrieben verwendet wird, um eine Zahnleiste eines Reißverschlusses aufzunehmen.

Das Seitenteil bzw. die Seitenteile der Form bilden vorzugsweise einen Formenring aus. Der Formenring umschließt das Sohlenunterteil und begrenzt dieses seitlich. In dem Formenring, also in dem Seitenteil bzw. den Seitenteilen der Form, ist vorzugsweise eine Nut eingearbeitet, um die Zahnleiste eines Reißverschlusses derart einlegen zu können, dass das Textilband des Reißverschlusses in die Sohlenkammer ragt. Dadurch kann bei geschlossener Sohlenform das Sohlenmaterial eingespritzt oder eingegossen werden, sodass nach dem Aushärten des Sohlenmaterials der Reißverschluss mit der Sohle fest verbunden wird.

Die Nut zum Einlegen des Zahnleistens eines Reißverschlusses kann entweder nur in dem Leisten vorgesehen sein oder entweder nur in dem Formenring bzw. einem Seitenteil oder mehreren Seitenteilen der Form vorgesehen sein oder in einem weiteren Ausführungsbeispiel sowohl in dem Leisten als auch in dem Formenring, also in einem Seitenteil oder in mehreren Seitenteilen der Form vorgesehen sein.

Insbesondere kann vorgesehen sein, dass die Nut mit einem konstanten Abstand zu der Oberfläche des Sohlenunterteils angeordnet ist, insbesondere als geschlossen umlaufende Nut ausgebildet ist.

Um eine Sohle mit einem verbesserten Finish bereitzustellen kann vorgesehen sein, dass das Seitenteil und/oder die Seitenteile und/oder das Unterteil Vakuumkanäle aufweist und/oder aufweisen, insbesondere um die Sohlenkammer zu entlüften und/oder um eine Folie zu halten. Die Folie kann vor dem Einbringen des Sohlenmaterials in die Sohlenkammer und/oder zwischen den Leisten und das Seitenteil oder das Unterteil der Form eingelegt werden. Die Folie kann dann in der Form durch Vakuum gehalten werden. Anschließend kann das Sohlenmaterial eingebracht und die Sohle angegossen werden.

Insbesondere kann die Folie thermisch verformt werden, sodass sich die Folie, insbesondere unter gleichzeitiger Vakuumeinwirkung, besonders gut an die mehrteilige Form, insbesondere an das Sohlenunterteil und/oder an das Seitenteil und/oder die Seitenteile anlegt. Dabei kann die Folie durch Erwärmen der mehrteiligen Form, oder durch das Einbringen von erwärmtem Sohlenmaterial erwärmt werden. Durch die thermische Verformung der Folie kann eine besonders gute Anlage der Folie an der mehrteiligen Form erzielt werden, sodass sich die eingelegte Folie nicht verschiebt. Auch kann einer Faltenbildung vorgebeugt werden.

Vorteilhafterweise kann vorgesehen sein, dass das Sohlenunterteil und/oder das Seitenteil bzw. die Seitenteile derart beweglich gelagert sind, dass diese geschlossen und geöffnet werden können, um zusammen mit einem Leisten, insbesondere einem Leisten wie vorstehend beschrieben, in ihrer geschlossenen Position eine Sohlenkammer ausbilden.

Ferner umfasst der erfindungsgemäße Gedanke auch einen Baukasten für einen Schuh hergestellt nach dem erfindungsgemäßen Herstellungsverfahren gemäß einem der hierin beschriebenen Beispiele, wobei der Baukasten wenigstens ein Schuh-Oberteil und wenigstens zwei verschiedene Sohlen umfasst, und/oder wenigstens eine Sohle und wenigstens zwei verschiedene Schuh-Oberteile umfasst, wobei der Schuh durch Verbinden eines der Schuh-Oberteile mit einer der Sohlen mittels Reißverschluss herstellbar ist.

Beispielsweise kann der Baukasten für den Schuh als Verkaufseinheit ausgebildet sein, sodass in einem Ladengeschäft oder im Schuhhandel der Baukasten als ein Set für den durch das erfindungsgemäße Verfahren hergestellten Schuh angeboten wird, welches zumindest ein Oberteil und wenigstens zwei verschiedene Sohlen umfasst, um beispielsweise den Charakter der Sohle anzupassen. Alternativ kann auch vorgesehen sein, dass der Baukasten bzw. das Set zur Herstellung des Schuhs angeboten wird, indem wenigstens zwei Schuhoberteile und eine Sohle angeboten wird, um das Design des Schuhs individuell anpassen zu können. Selbstverständlich kann der Baukasten bzw. das Verkaufsset auch mit einer variablen Anzahl und Art von Schuhoberteilen oder Sohlen angeboten werden, um einem Kunden die Möglichkeit zu geben, den Schuh individuell zu gestalten.

Dabei kann insbesondere vorgesehen sein, dass die Art des Schuhs und/oder das Design des Schuhs durch Tausch der Sohle gegen eine andere Sohle und/oder durch Tausch des Oberteils gegen ein anderes Oberteil abänderbar ist.

In den Figuren sind beispielhafte Ausgestaltungen des erfindungsgemäßen Herstellverfahrens und des durch das Herstellverfahren hergestellten Schuhs gezeigt und in der nachfolgenden Figurenbeschreibung beschrieben. Dabei zeigen:
- Fig. 1: eine schematische 3D-Ansicht einer Vorrichtung zur Durchführung des erfindungsgemäßen Herstellungsverfahrens;
- Fig. 2: eine schematische Darstellung des Verfahrensschritts Einlegen des Reißverschlusses in die Nut eines Leistens;
- Fig. 3: eine Ausschnittdarstellung einer mehrteiligen Form zur Durchführung des erfindungsgemäßen Herstellungsverfahrens;
- Fig. 4: eine alternative Ausgestaltung gem. Fig. 3;
- Fig. 5: eine schematische Explosionsdarstellung einer mehrteiligen Form zur Durchführung des erfindungsgemäßen Verfahrens;
- Fig. 6: einen Leisten;
- Fig. 7: ein Schuh hergestellt mit dem erfindungsgemäßen Herstellungsverfahren;
- Fig. 8: eine Schnittdarstellung einer alternativen Ausgestaltung einer mehrteiligen Form zur Durchführung des erfindungsgemäßen Herstellungsverfahrens;
- Fig 9: eine weitere Abwandlung einer mehrteiligen Form zur Durchführung des erfindungsgemäßen Herstellungsverfahrens.

In den Figuren sind unterschiedliche Ausgestaltungen und Beispiele zur Umsetzung der Erfindung dargestellt. Diese Beispiele dienen der Erläuterung der Erfindung und sollen nicht einschränkend verstanden werden. Für den Fachmann ist klar, dass er die in den Figuren gezeigten Ausgestaltungen innerhalb des durch die Patentansprüche vorgegebenen Rahmens abändern und variieren kann, ohne dabei den Grundgedanken der Erfindung zu verlassen.

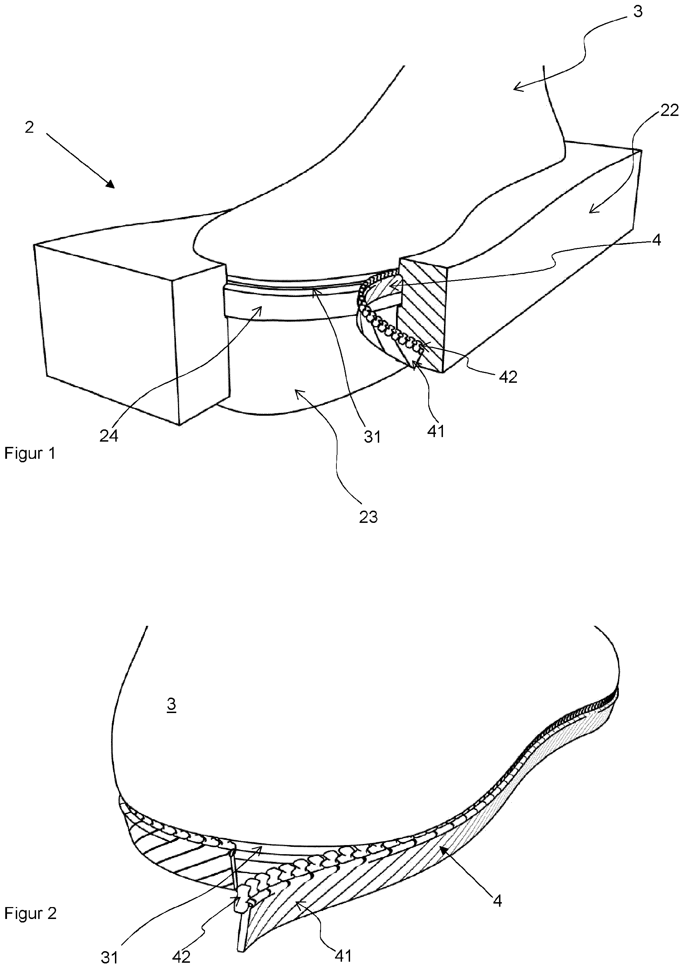

Fig. 1 zeigt eine mehrteilige Form 2 zur Durchführung des erfindungsgemäßen Herstellungsverfahrens für einen Schuh 1. Die mehrteilige Form 2 weist ein Sohlenunterteil 23 auf, welches seitlich von Seitenteilen 22 begrenzt wird. An der Oberseite der mehrteiligen Form 2 ist ein Leisten 3 angeordnet. Die Teile der mehrteiligen Form 2 zusammen umschließen eine Sohlenkammer 24. Der Leisten 3 weist eine umlaufende Nut 31 auf, in die ein Reißverschluss 4 eingelegt wird.

In der Fig. 2 ist eine Detailvergrößerung des Leistens 3 mit Nut 31 dargestellt. Ferner ist in Fig. 2 angedeutet wie der Reißverschluss 4 in die Nut eingelegt wird. Der Reißverschluss 4 weist ein Textilband 41 auf, auf dem die Schließglieder in Form von Krampen 42 gehaltert sind. Die Nut 31 des Leistens 3 ist so ausgebildet, dass diese die Schließglieder oder Krampen 42 des Reißverschlusses derart aufnimmt, dass das Textilband 41 des Reißverschlusses nach unten in die Sohlenkammer 24 abragt.

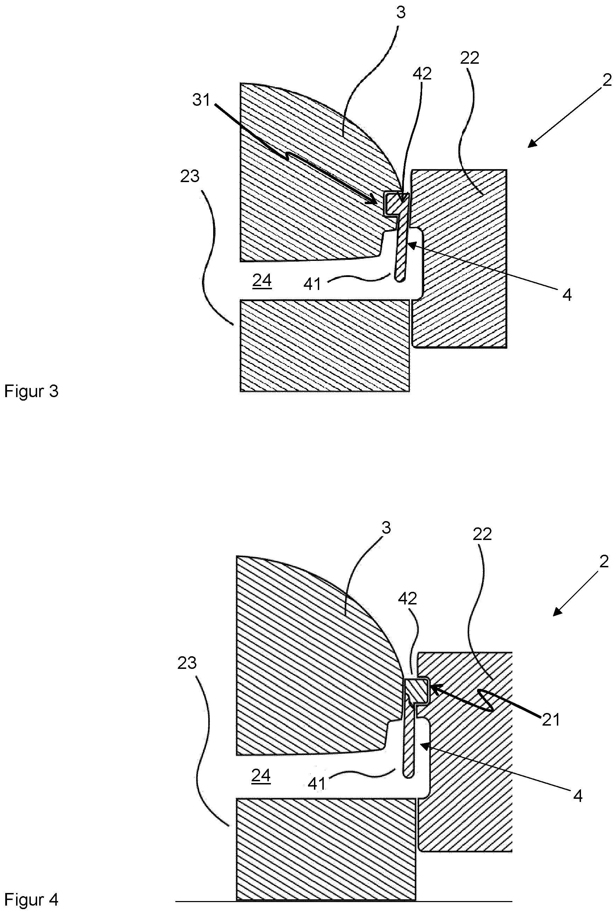

Die Fig. 3 zeigt einen Ausschnitt aus der mehrteiligen Form 2. In dem Ausschnitt sieht man den Leisten 3, der die Sohlenkammer 24 nach oben abschließt und eine Nut 31 aufweist, in die der Reißverschluss 4 eingelegt wird. Das Textilband 41 des Reißverschlusses 4 ragt nach unten in die Sohlenkammer 24. Die Schließglieder 42 des Reißverschlusses 4 werden durch die Nut 31 des Leistens 3 aufgenommen. Das Seitenteil 22 schließt den Leisten und das Sohlenunterteil 23 seitlich ab. Das Sohlenunterteil 23 ist unterhalb der Sohlenkammer 24 angeordnet und bildet den Boden der Sohlenkammer 24 aus.

Die Darstellung der mehrteiligen Form 2 in Fig. 4 entspricht der Darstellung in Fig. 3, mit dem Unterschied, dass die Nut 21 zum Einlegen des Reißverschlusses 4 nicht im Leisten 3, sondern in dem Seitenteil 22 angeordnet ist. Im Übrigen stimmt die Darstellung der Fig. 4 mit der Darstellung der Fig. 3 überein.

Alternativ sind auch Ausgestaltungen denkbar, bei denen sowohl der Leisten 3 eine Nut 31 wie auch das Seitenteil 22 eine Nut 21 aufweist, um die Schließglieder 42 des Reißverschlusses 4 aufzunehmen.

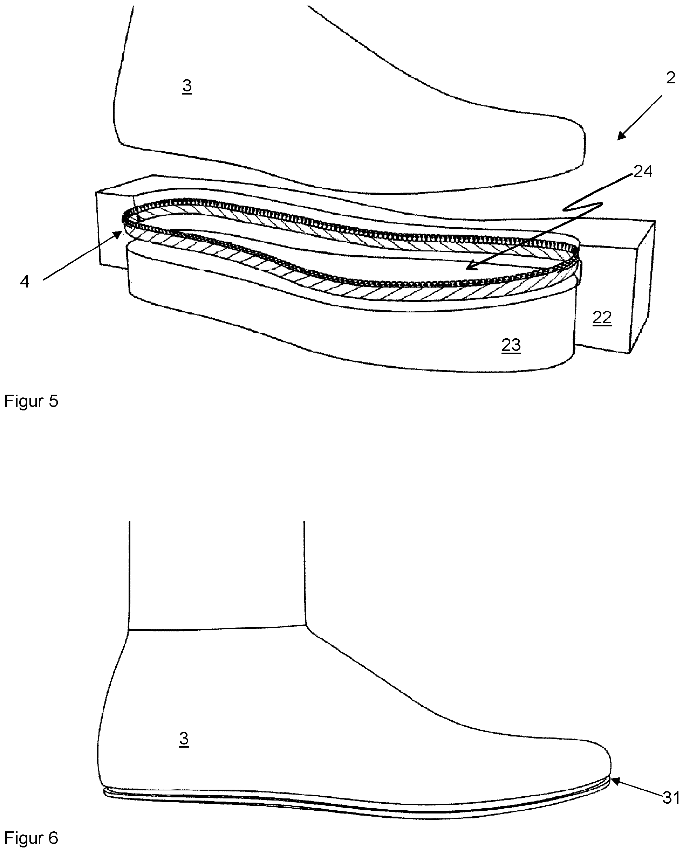

In der Fig. 5 ist die mehrteilige Vorrichtung 2 nochmal in perspektivischer Darstellung gezeigt. Hieraus ist ersichtlich, dass das Seitenteil 22 das Sohlenunterteil seitlich begrenzt und der Leisten 3 von oben aufgesetzt wird, um die Sohlenkammer 24 allseits abzuschließen.

Es ist vorgesehen, dass einzelne Teile der mehrteiligen Form 2 beweglich gelagert sind, sodass die Form 2 geöffnet und geschlossen werden kann. In ihrer geschlossenen Position mit eingelegtem Reißverschluss 4 ist vorgesehen, dass die Sohle 12 des herzustellenden Schuhs 1 ausgebildet wird, indem Sohlenmaterial in die Sohlenkammer 24 eingespritzt oder eingegossen wird. Anschließend härtet das Sohlenmaterial aus und verbindet sich mit dem Reißverschluss 4 derart, dass dieser unlösbar mit der hergestellten Sohle 12 verbunden ist.

In der Fig. 6 ist ein Leisten 3 beispielhaft dargestellt. Der Leisten kann beispielsweise aus einem festen Material, wie Metall oder Aluminium oder Kunststoff ausgebildet sein. Der Leisten 3 weist an seiner unteren Umfangskante eine Nut 31 auf. Die Nut 31 ist um den Leisten 3 geschlossen umlaufend ausgebildet. In die Nut 31 kann die Zahnleiste 42 eines Reißverschlusses 4 eingelegt werden, um diese anschließend in der mehrteiligen Form 2 mit der Sohle 12 durch ein Anspritzverfahren "direct injection" oder ein Gießverfahren zu verbinden.

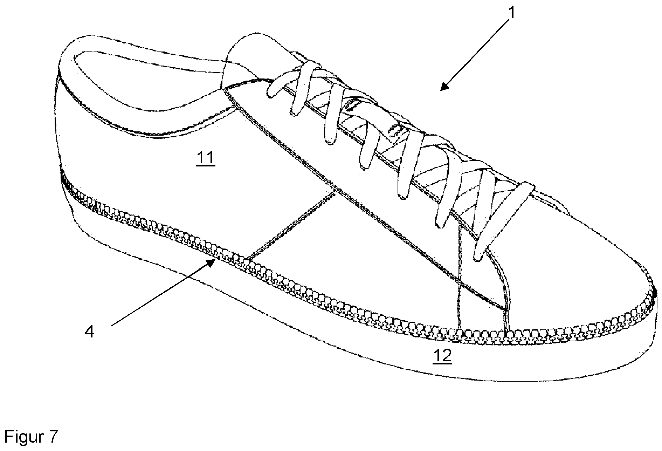

In der Fig. 7 ist ein gemäß dem erfindungsgemäßen Herstellungsverfahren hergestellter Schuh 1 dargestellt. Der Schuh 1 weist ein Oberteil 11 sowie eine Sohle 12 auf. Das Oberteil 11 ist mit der Sohle 12 über den Reißverschluss 4 verbunden. Durch Öffnen und Trennen des Reißverschlusses 4 kann das Oberteil 11 abgenommen und gegen ein anderes Oberteil getauscht werden. Ebenso ist es möglich, das Oberteil 11 zu belassen und stattdessen die Sohle 12 auszutauschen. Dadurch ist es auf einfache Art und Weise möglich, den Schuh an unterschiedliche Belange anzupassen. Beispielsweise kann aus Designgründen das Schuhoberteil 11 ausgetauscht werden, um das äußere Erscheinungsbild des Schuhs abzuwandeln. Ebenso kann auch die Sohle 12 ausgetauscht werden, um beispielsweise einen Sportschuh von einem Hallensportschuh in einen Outdoor-Sportschuh umzuwandeln, indem eine Hallensohle 12 gegen eine Outdoor-Sohle 12 getauscht wird. Auch ist es möglich, eine Kunststoffsohle 12 gegen eine Ledersohle 12 auszutauschen und mit dem Oberteil 11 zu verbinden. Dazu kann vorgesehen sein, dass auf der Oberseite der Ledersohle eine entsprechende Kunststoffschicht angeordnet ist, welche im Anspritzverfahren oder Gießverfahren mit dem Reißverschluss 4 in der mehrteiligen Form 2 verbunden wird. Dadurch ist es auch möglich, beispielsweise einen Sportschuh oder Sneaker mit einer Ledersohle zu versehen und somit dem Schuh ein förmlicheres Aussehen zu geben.

Ebenso ist es möglich, im Falle eines Defekts der Sohle 12 diese gegen eine neue Sohle zu tauschen und so den Schuh quasi im Handumdrehen zu reparieren. Auf gleiche Art und Weise kann auch das Schuhoberteil 11 bzw. der Topper 11 ausgetauscht werden, sollte an diesem ein Defekt auftreten. Dadurch kann der mit dem erfindungsgemäßen Herstellungsverfahren hergestellte Schuh auf einfache Art und Weise repariert werden, sodass Ressourcen und Kosten eingespart werden können.

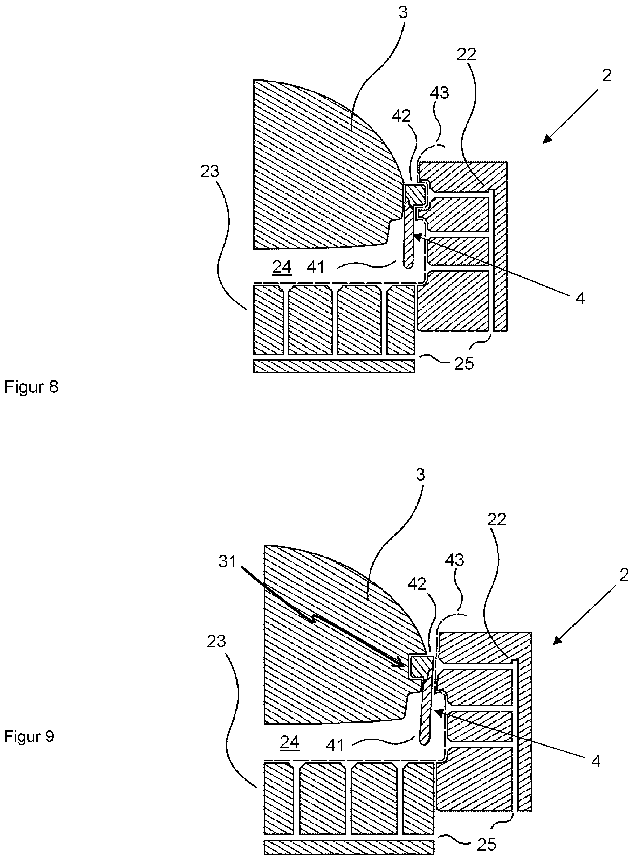

In der Fig. 8 ist eine Variante der mehrteiligen Form 2 dargestellt. Hierbei ist die mehrteilige Form 2 analog der mehrteiligen Form gemäß Fig. 4 aufgebaut. Die mehrteilige Form 2 weist eine Sohlenkammer 24 auf, die durch den oben angeordneten Leisten 3, die Seitenteile 22 bzw. das Sohlenteil 23 begrenzt wird. Das Seitenteil 22 weist eine Nut auf, in die ein Reisverschluss eingelegt wird. Das Textilband 41 des Reisverschlusses 4 ragt nach unten in die Sohlenkammer 24. Die Schließglieder 42 des Reisverschlusses werden durch die Nut in dem Seitenteil 22 aufgenommen. Im Unterschied zu den Darstellungen in der Fig. 3 und der Fig. 4 weist das Seitenteil 22 und das Sohlenteil 23 Vakuumkanäle 25 auf. Mittels der Vakuumkanäle 25 kann in der Sohlenkammer 24 ein Vakuum erzeugt werden bzw. die Sohlenkammer 24 kann entlüftet werden.

Zur Herstellung des Schuhs wird zwischen dem Leisten 3 und der Form 2, d.h. dem Seitenteil 22 und dem Sohlenteil 23 eine Folie 43 eingelegt. Die Folie 43 kann mittels Vakuums gehalten werden. Der Vorteil der Folie ist, dass dadurch der Produktionsprozess vereinfacht wird. Die Folie kann beispielsweise dazu beitragen, eine in sich geschlossene Sohlenoberfläche zu erhalten oder das Finish der Sohle zu verbessern.

Die Fig. 9 zeigt eine alternative Ausgestaltung der mehrteiligen Form 2. Im Unterschied zu der Darstellung der Fig. 8 weist hier der Leisten 3 die Nut 31 auf, in die die Schließglieder 42 des Reisverschlusses 4 eingelegt werden. Die Folie 43 wird analog wie bei der Fig. 8 dargestellt zwischen Leisten 3 und Seitenteil 22 bzw. Sohlenteil 23 eingelegt. Auch hier wird wieder durch Vakuum, welches über die Vakuumkanäle 25 eingebracht wird, die Folie 43 gehalten bzw. an dem Seitenteil 22 und dem Sohlenteil 23 fixiert. Nach Einlegen der Folie 43 wird das Sohlenmaterial in die Sohlenkammer 24 eingebracht und ausgehärtet.

In Abwandlung zu der Darstellung der Figuren 8 und 9 ist es selbstverständlich auch möglich, eine mehrteilige Form zu schaffen, bei der sowohl der Leisten 3 als auch das Seitenteil 22 eine Nut aufweist, derart, dass die Schließglieder 42 des Reisverschlusses 4 sowohl in der Nut des Leistens als auch in der Nut des Seitenteils 22 aufgenommen werden. Auch hier ist es möglich, dass eine Folie 43 zwischen dem Leisten 3 und dem Seitenteil 22 bzw. dem Sohlenteil 23 eingelegt und durch Vakuum gehalten wird, um das Finish oder die Oberfläche der Sohle zu verbessern.

### Bezugszeichenliste

- 1: Schuh
- 11: Oberteil, Topper
- 12: Sohle

- 2: Form
- 21: Nut
- 22: Seitenteil
- 23: Sohlenunterteil
- 24: Sohlenkammer
- 25: Vakuumkanäle

- 3: Leisten
- 31: Nut

- 4: Reißverschluss
- 41: Textilband
- 42: Krampen
- 43: Folie

## Patentansprüche

1. Verfahren zur Herstellung eines Schuhs (1), wobei der Schuh (1) ein Oberteil (11) aufweist, welches mittels eines trennbaren Reißverschlusses (4) mit der Sohle (12) verbunden ist und durch Öffnen des Reißverschlusses (4) von der Sohle (12) abnehmbar ist,
**dadurch gekennzeichnet,**
**dass** der Reißverschluss (4) mit der Sohle (12) verbunden wird, indem die Sohle (12) an ein Teil des Reißverschlusses (4) angespritzt oder angegossen wird, oder indem die Sohle (12) um ein Teil des Reißverschlusses (4) umspritzt wird, oder indem ein Teil des Reißverschlusses (4) von der Sohle (12) umgossen wird.

2. Verfahren zur Herstellung eines Schuhs nach Anspruch 1,
**dadurch gekennzeichnet,**
**dass** zur Herstellung des Schuhs (1) eine mehrteilige Form (2) verwendet wird, die einen Leisten (3), ein Sohlenunterteil (23), sowie wenigstens ein Seitenteil (22) oder mehrere Seitenteile umfasst, und wobei das Sohlenunterteil (23), das Seitenteil (22) bzw. die Seitenteile und der Leisten (3) gemeinsam eine Sohlenkammer (24) bilden, und wobei der Leisten (3) und/oder das wenigstens eine Seitenteil (22) bzw. die mehreren Seitenteile eine umlaufende Nut (21, 31) aufweist bzw. aufweisen, und in die umlaufende Nut eine Zahnleiste (42) des Reißverschlusses (4) derart eingelegt wird, dass ein Textilband (41) des Reißverschlusses (4) nach unten in die Sohlenkammer (24) ragt.

3. Verfahren zur Herstellung eines Schuhs nach Anspruch 2,
**dadurch gekennzeichnet,**
**dass** nach dem Einlegen der Zahnleiste (42) des Reißverschlusses (4) in die Nut (21, 31) die Form (2) geschlossen wird und anschließend Sohlenmaterial in die Sohlenkammer (24) eingespritzt oder eingegossen und dort ausgehärtet wird, wobei beim Aushärten des Sohlenmaterials das Textilband (41) des Reißverschlusses (4) mit dem Sohlenmaterial verbunden wird, wobei vorzugsweise vorgesehen ist,
**dass** das Sohlenprofil des Schuhs durch das Sohlenunterteil (23) ausgeformt wird.

4. Verfahren zur Herstellung eines Schuhs nach einem der vorhergehenden Ansprüche,
**dadurch gekennzeichnet,**
**dass** die Sohle (12) aus verschiedenen Materialien aufgebaut ist, wobei ein Material der verschiedenen Materialien oder mehrere der verschiedenen Materialien vor dem Einspritzen oder Eingießen des Sohlenmaterials in die Sohlenkammer (24) eingebracht wird, oder dass mehrere der verschiedenen Materialien in die Sohlenkammer (24) nacheinander eingespritzt oder eingegossen werden und dort aushärten.

5. Verfahren zur Herstellung eines Schuhs nach einem der Ansprüche 2 bis 4,
**dadurch gekennzeichnet,**
**dass** in die Sohlenkammer (24) und/oder dass zwischen Leisten (3) und Form (2) eine Folie (43) eingelegt wird, und dass die Folie in der Form (2) durch Vakuum gehalten wird.

6. Verfahren zur Herstellung eines Schuhs nach einem der vorhergehenden Ansprüche,
**dadurch gekennzeichnet,**
**dass** ein Schuhoberteil (11) bereitgestellt wird, welches an seinem unteren umlaufenden Rand ein Teil des trennbaren Reißverschlusses (4) aufweist und wobei der Schuh (1) durch Verbinden des Schuhoberteils (11) mit der Sohle (12) durch Schließen des Reißverschlusses (4) fertiggestellt wird.

7. Verfahren zur Herstellung eines Schuhs nach Anspruch 6,
**dadurch gekennzeichnet,**
**dass** das Schuhoberteil (11) an seiner Innenseite eine Lasche aufweist, insbesondere eine umlaufende Lasche aufweist, um die Zahnleiste (42) des Reißverschlusses (4) abzudecken und/oder abzupolstern.

8. Verfahren zur Herstellung eines Schuhs nach einem der vorhergehenden Ansprüche,
**dadurch gekennzeichnet,**
**dass** als Reißverschluss (4) ein wasserdichter Reißverschluss oder ein wasserabweisender Reißverschluss verwendet wird.

9. Baukasten für einen Schuh (1) hergestellt nach dem Herstellungsverfahren gemäß einem der Ansprüche 1 bis 8, wobei der Baukasten wenigstens ein Schuh-Oberteil (11) und wenigstens zwei verschiedene Sohlen (12) umfasst, und/oder wenigstens eine Sohle (12) und wenigstens zwei verschiedene Schuh-Oberteile (11) umfasst, wobei der Schuh (1) durch Verbinden eines der Schuh-Oberteile (11) mit einer der Sohlen (12) mittels Reißverschluss (4) herstellbar ist.

10. Baukasten für einen Schuh nach Anspruch 9,
**dadurch gekennzeichnet,**
**dass** die Art des Schuhs (1) und/oder das Design des Schuhs (1) durch Tausch der Sohle (12) gegen eine andere Sohle (12) und/oder durch Tausch des Schuh-Oberteils (11) gegen ein anderes Schuh-Oberteil (11) abänderbar ist.

## Claims

1. Method for manufacturing a shoe (1), the shoe (1) having an upper part (11) which is connected to the sole (12) by means of a separable zipper (4) and can be removed from the sole (12) by opening the zipper (4),
**characterized in that**
the zipper (4) is connected to the sole (12) by the sole (12) being injection-molded or cast onto a part of the zipper (4), or by the sole (12) being injection-molded around a part of the zipper (4), or by a part of the zipper (4) being cast around the sole (12).

2. Method for manufacturing a shoe according to claim 1,
**characterized in that**
a multi-part mold (2) is used to manufacture the shoe (1), which comprises a last (3), a sole bottom part (23) and at least one side part (22) or a plurality of side parts, and wherein the sole bottom part (23), the side part (22) or the side parts and the last (3) together form a sole chamber (24), and wherein the last (3) and/or the at least one side part (22) or the plurality of side parts has or have a circumferential groove (21, 31), and a toothed bar (42) of the zipper (4) is inserted into the circumferential groove in such a way that a textile strip (41) of the zipper (4) projects downwards into the sole chamber (24).

3. Method for manufacturing a shoe according to claim 2,
**characterized in that**
after insertion of the toothed bar (42) of the zipper (4) into the groove (21, 31), the mold (2) is closed and sole material is then injected or cast into the sole chamber (24) and cured there, wherein the textile strip (41) of the zipper (4) is bonded to the sole material during curing of the sole material, wherein it is preferably provided,
that the sole tread of the shoe is shaped by the bottom part of the sole (23).

4. Method for manufacturing a shoe according to one of the preceding claims,
**characterized in that**
the sole (12) is constructed from different materials, wherein one material of the different materials or several of the different materials are introduced into the sole chamber (24) before the sole material is injected or cast in, or that several of the different materials are injected or cast into the sole chamber (24) one after the other and cured there.

5. Method for manufacturing a shoe according to one of claims 2 to 4,
**characterized in that**
a foil (43) is inserted into the sole chamber (24) and/or that a foil (43) is inserted between the last (3) and the mold (2), and that the foil is held in the mold (2) by vacuum.

6. Method for manufacturing a shoe according to one of the preceding claims,
**characterized in that**
a shoe upper (11) is provided, which has a part of the separable zipper (4) on its lower circumferential edge, and wherein the shoe (1) is finished by connecting the shoe upper (11) to the sole (12) by closing the zipper (4).

7. Method for manufacturing a shoe according to claim 6,
**characterized in that**
the shoe upper (11) has a flap on its inner side, in particular a circumferential flap, in order to cover and/or cushion the toothed bar (42) of the zipper (4).

8. Method for manufacturing a shoe according to one of the preceding claims,
**characterized in that**
a waterproof zipper or a water-repellent zipper is used as the zipper (4).

9. A construction kit for a shoe (1) manufactured according to the manufacturing method according to any one of claims 1 to 8, wherein the construction kit comprises at least one shoe upper (11) and at least two different soles (12), and/or comprises at least one sole (12) and at least two different shoe uppers (11), wherein the shoe (1) can be manufactured by connecting one of the shoe uppers (11) to one of the soles (12) by means of a zipper (4).

10. Construction kit for a shoe according to claim 9,
**characterized in that**
the type of shoe (1) and/or the design of the shoe (1) can be changed by exchanging the sole (12) for another sole (12) and/or by exchanging the shoe upper (11) for another shoe upper (11).

## Revendications

1. Procédé de fabrication d'une chaussure (1), la chaussure (1) présentant une tige (11) qui est reliée à la semelle (12) au moyen d'une fermeture à glissière (4) séparable et qui peut être retirée de la semelle (12) par ouverture de la fermeture à glissière (4),
**caractérisé en ce que**
la fermeture à glissière (4) est reliée à la semelle (12) en injectant ou en moulant la semelle (12) sur une partie de la fermeture à glissière (4), ou en moulant la semelle (12) autour d'une partie de la fermeture à glissière (4), ou en moulant une partie de la fermeture à glissière (4) à partir de la semelle (12).

2. Procédé de fabrication d'une chaussure selon la revendication 1,
**caractérisé en ce que**
pour la fabrication de la chaussure (1), on utilise un moule (2) en plusieurs parties, qui comprend une forme (3), une partie inférieure de semelle (23), ainsi qu'au moins une partie latérale (22) ou plusieurs parties latérales, et dans lequel la partie inférieure de semelle (23), la partie latérale (22) ou les parties latérales et la forme (3) forment ensemble une chambre de semelle (24), et la forme (3) et/ou la partie latérale (22) ou les parties latérales présente ou présentent une rainure périphérique (21, 31), et une crémaillère (42) de la fermeture à glissière (4) est insérée dans la rainure périphérique de telle sorte qu'une bande textile (41) de la fermeture à glissière (4) dépasse vers le bas dans la chambre de semelle (24).

3. Procédé de fabrication d'une chaussure selon la revendication 2,
**caractérisé en ce que**
après l'insertion de la crémaillère (42) de la fermeture à glissière (4) dans la rainure (21, 31), le moule (2) est fermé et un matériau de semelle est ensuite injecté ou coulé dans la chambre de semelle (24) et y est durci, la bande textile (41) de la fermeture à glissière (4) étant reliée au matériau de semelle lors du durcissement du matériau de semelle, étant prévu de préférence, que le profil de semelle de la chaussure est formé par la partie inférieure de semelle (23).

4. Procédé de fabrication d'une chaussure selon l'une quelconque des revendications précédentes,
**caractérisé en ce que**
la semelle (12) est constituée de différents matériaux, un matériau des différents matériaux ou plusieurs des différents matériaux étant introduits dans la chambre de semelle (24) avant l'injection ou la coulée du matériau de semelle, ou **en ce que** plusieurs des différents matériaux sont injectés ou coulés successivement dans la chambre de semelle (24) et y durcissent.

5. Procédé de fabrication d'une chaussure selon l'une quelconque des revendications 2 à 4,
**caractérisé en ce que**
une feuille (43) est insérée dans la chambre de semelle (24) et/ou **en ce qu'**une feuille (43) est insérée entre la forme (3) et le moule (2), et **en ce que** la feuille est maintenue dans le moule (2) par le vide.

6. Procédé de fabrication d'une chaussure selon l'une quelconque des revendications précédentes,
**caractérisé en ce que**
une tige de la chaussure (11) est fournie qui présente sur son bord périphérique inférieur une partie de la fermeture à glissière (4) séparable et dans lequel la chaussure (1) est terminée en reliant la tige de la chaussure (11) à la semelle (12) par fermeture de la fermeture à glissière (4).

7. Procédé de fabrication d'une chaussure selon la revendication 6,
**caractérisé en ce que**
la tige de la chaussure (11) présente sur son côté intérieur une languette, en particulier une languette périphérique, pour recouvrir et/ou rembourrer la crémaillère (42) de la fermeture à glissière (4).

8. Procédé de fabrication d'une chaussure selon l'une quelconque des revendications précédentes,
**caractérisé en ce que**
l'on utilise comme fermeture à glissière (4) une fermeture à glissière étanche à l'eau ou une fermeture à glissière repoussant l'eau.

9. Ensemble modulaire pour une chaussure (1) fabriquée selon le procédé de fabrication selon l'une quelconque des revendications 1 à 8, ledit ensemble modulaire comprenant au moins une tige de la chaussure (11) et au moins deux semelles différentes (12), et/ou comprenant au moins une semelle (12) et au moins deux tiges de la chaussure différents (11), la chaussure (1) pouvant être fabriquée en reliant l'un des tiges de la chaussure (11) à l'une des semelles (12) au moyen d'une fermeture à glissière (4).

10. Ensemble de construction pour une chaussure selon la revendication 9,
**caractérisé en ce que**
le type de la chaussure (1) et/ou le design de la chaussure (1) peut être modifié par échange de la semelle (12) contre une autre semelle (12) et/ou par échange de la tige de la chaussure (11) contre une autre tige de la chaussure (11).
